# EUROPEAN PATENT APPLICATION

(11) **EP 4 687 051 A1**
(43) Date of publication of application: **04.02.2026**
(21) Application number: 25191584.9
(22) Date of filing: 24.07.2025
(51) Int. Cl.: G06F 16/906

(54) **COMPUTER SYSTEM AND METHOD FOR MASS TAGGING OF ASSETS IN AUTOMATED AND INDUSTRIAL CONTROL SYSTEMS**

(30) Priority: 29.07.2024 US 202418787803
(71) Applicant: Schneider Electric USA, Inc., Andover, MA 01810 (US)
(72) Inventor: Marie, Sylvain, 38000 Grenoble (FR); Weber, Axelle, 38000 Grenoble (FR); Bowman, Jeff, Andover, MA, 01810 (US); Lagarde, Theo, 38000 Grenoble (FR); Makhoul, Khaldoun, Andover, MA, 01810 (US); Bhuiyan, Mahmudul Hasan, 3800 Grenoble (FR); Said, Souheil Hadj, 92500 Rueil Malmaison (FR); Biswas, Dipanjan, 560037 Bangalore (IN); Norman, Benjamin, Andover, MA, 01810 (US); Obara, Henri, 38000 Grenoble (FR)
(74) Representative: Manitz Finsterwald Patent- und Rechtsanwaltspartnerschaft mbB

(57) **Abstract**

System and method for grouping like equipment in an AIC system. A textual label of the reference equipment is embedded in a first numeral value and textual attributes associated with each point associated with the reference equipment are embedded in a second numerical value. A textual label of at least one candidate equipment is embedded in a third numerical value and textual attributes associated with each point associated with the at least one candidate equipment are embedded in a fourth numerical value. The first and third numerical values are compared to one another to determine if there is a sufficient level of similarity. Responsive to determining there is a sufficient level of similarity between the first and third numerical values, the second and fourth numerical values are compared to one another to determine if there is a sufficient level of similarity. Group the reference equipment with the at least one candidate equipment, responsive to determining a sufficient level of similarity between the third and fourth numerical values.

## Description

### Background

### 1. FIELD

The illustrated embodiments relate generally to the field of automated and industrial control (AIC) systems, such as a building management system (BMS), and/or a Supervisory Control and Data Acquisition (SCADA) system. The illustrated embodiments more particularly relate to systems and methods, using Artificial Intelligence (AI), for logically grouping assets in a computer database.

### 2. DESCRIPTION OF RELATED ART

An automated and industrial control system (AIC), such as a building management system (BMS) and/or Supervisory Control and Data Acquisition (SCADA) system is, in general, a system of devices configured to generally monitor and control equipment, industrial processes, and/or infrastructure, in or around a building, building area, industrial plant, grid, etc. For instance, and with regard to a BMS, it's a computer-based control system installed in buildings that controls and monitors the building's mechanical and electrical equipment. Its primary functions may include (but not limited to): heating; ventilation; and air conditioning (HVAC) system control; lighting control; security and access control; energy management; fire and life safety systems; elevator and escalator management and facility management; or any combination thereof. BMS devices may be installed in various environments (e.g., an indoor area or an outdoor area) and the environment may include any number of buildings, spaces, zones, rooms, or areas. And with regard to a SCADA system, it's a computer-based system configured for typically monitoring and controlling industrial processes and infrastructure. Its primary functions may include (but not limited to): data acquisition; data communication; data processing and analysis; control and monitoring; alarm management; and historical data storage.

Generally a BMS system focuses on managing building infrastructure for comfort, safety, and efficiency (e.g., in commercial buildings, office complexes, hospitals, and residential buildings). And a SCADA system focuses on monitoring and controlling industrial processes (e.g., in industries such as manufacturing, energy, water and wastewater, oil and gas, and transportation). Thus, an AIC system (e.g., a BMS and/or a SCADA system) may manage, control and/or monitor a variety of devices (e.g., HVAC devices, controllers, chillers, fans, sensors, conveyers, pumps, motors, ovens, data center cooling units, rack sensors, precision air conditioners, uninterruptible power supply units, transformers, etc.) configured to facilitate monitoring and controlling various environments (e.g., buildings, plants and grids).

Currently, building management systems frequently provide control of an entire facility, building, or other environment. These systems may require skilled persons to adjust, control, and otherwise operate the building management system, due to the complexity involved. In large facilities or buildings, this management can be labor intensive. Moreover, in buildings where dynamic management of the building management system is required (e.g., buildings with multiple independent HVAC requirements), advanced control strategies may be required.

Once a AIC (e.g., BMS and/or a SCADA) system is commissioned and operational at a user site, the generally large size of BMS and/or a SCADA systems makes operational control of the complex large number of building assets/devices/equipment managed by the BMS and/or a SCADA system difficult. Furthermore, as systems change over time, it is important to monitor and understand how the changes to an AIC system over time have affected the AIC system. For example, as additional devices/equipment and data points are added to a BMS and/or a SCADA system, the overall system performance should be monitored to determine the impact of the changes to the BMS and/or a SCADA system, and/or comparing different buildings/systems (e.g., for benchmarking), developing applications or services on top of a portfolio of several buildings (e.g. for system diagnosis, fault detection, occupant services), additional to other objectives.

Additionally, manual semantic tagging of objects within a BMS and/or a SCADA is a laborious and resource-intensive process, often demanding significant time and financial investment, especially in larger buildings. This substantial cost, both in terms of time and capital, frequently dissuades BMS and/or a SCADA system owners or users (typically system integrators, field services, or facility management teams) from undertaking such tagging activities. Consequently, the potential benefits that could be derived from a well-tagged BMS and/or a SCADA system, including enhanced energy efficiency, reduced operational expenses, prolonged equipment lifespan, and improved occupant comfort, remain largely unrealized. Thus, it would be desirous to have a tool available that could easily and efficiently analyze an AIC system (e.g., a BMS and/or a SCADA system), in part or in whole, to logically identify grouping of like assets, and/or identify equipment composed of a plurality of different assets, which thus simplifies an asset tagging task.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, described is a computer tool and method that provides automated grouping of assets (e.g., points) and equipment (defined by one or more points, and as further defined below), which grouping of a larger number of objects within an automated and industrial control system (AIC), such as a BMS or SCADA system, by a computer monitoring tool, provides significantly improved outcomes for building operators and occupants for inventorying AIC assets. By streamlining and automating this critical aspect of AIC management, the illustrated embodiments provide significant improvements in the way building operators optimize their building systems.

In other aspects of the illustrated embodiments, described is a computer-implemented method and system for grouping like equipment in a computer database managed by an AIC system, such as a BMS or a SCADA system. An equipment and associated points are identified from a computer database as a reference for grouping one or more other candidate equipment, that are similar to the identified equipment and its points, from a plurality of other candidate equipment managed by the AIC. A textual label of the reference equipment is embedded in a first numeral value and textual attributes associated with each point associated with the reference equipment are embedded in a second numerical value using an algorithmic technique. A textual label of at least another candidate equipment, in the computer database, is embedded in a third numerical value and textual attributes associated with each point associated with the at least another candidate equipment are embedded in a fourth numerical value using the algorithmic technique. The first and third numerical values are compared to one another to determine if there is a sufficient level of similarity, and responsive to determining there is a sufficient level of similarity between the first and third numerical values, the second and fourth numerical values are compared to one another to determine if there is a sufficient level of similarity. Group, in the computer database, the reference equipment with the at least another candidate equipment, responsive to determining a sufficient level of similarity between the third and fourth numerical values. Assign, based upon a labelling technique, a semantic tag to each equipment grouping.

Thus, the illustrated embodiments for logically grouping assets in a computer database in an automated and industrial control system (AIC) provides a technical improvement to a computer database of assets managed by AIC by automating the process for logically grouping assets in a computer database in a AIC managed computer database.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 illustrates a diagram depicting an Artificial Intelligence (AI) device utilized with one or more of the illustrated embodiments;
FIG. 4 illustrates a diagram depicting an AI server utilized with one or more of the illustrated embodiments;
FIG. 5 illustrates a simplified system level diagram of a BMS in accordance with the illustrated embodiments;
FIG. 6 illustrates a process for grouping points in accordance with the illustrated embodiments;
FIG. 7 illustrates a GUI of a computer database in accordance with the illustrated embodiments;
FIG. 8 illustrates a GUI of a computer database having grouped/tagged points in accordance with the illustrated embodiments regarding points grouping; and
FIG. 9 illustrates a process for grouping equipment in accordance with the illustrated embodiments; and
FIG. 10 illustrates a GUI of a computer database in accordance with the illustrated embodiments regarding equipment grouping.

### DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this illustrated embodiment belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

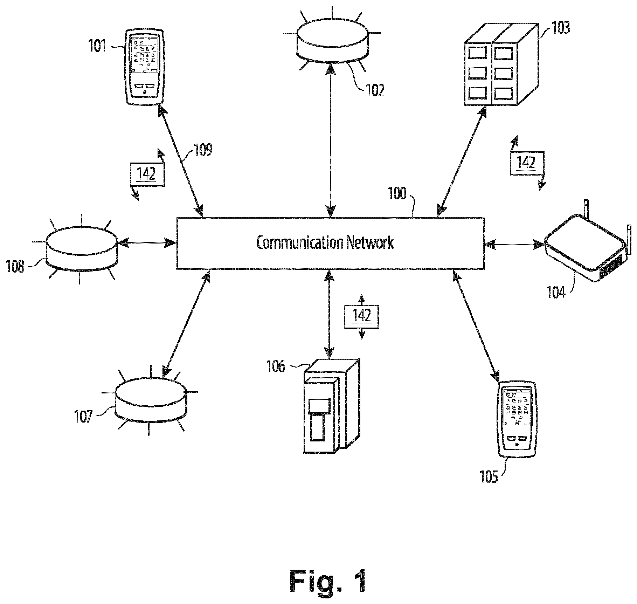

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others. Specifically regarding buildings/plants/grids, Building Automation Control Network (BACNet), Local Operating Network (LonWorks), a Modbus protocol, OPC Unified Architecture (OPC-UA, and the IEC61850 standard may be used as communication links, for instance.

FIG. 1 is a schematic block diagram of an example communication network 100 illustratively comprising nodes/devices 101-108 (e.g., sensors 102, computing monitoring device 103, smart phone devices 105, web servers / computer systems 106 (e.g., a BMS system), computer systems 103, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the illustrated embodiments may be written in any combination of one or more programming languages, including an object oriented programming language such as Python, Golang, Ruby, ASP.NET, Java, , C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

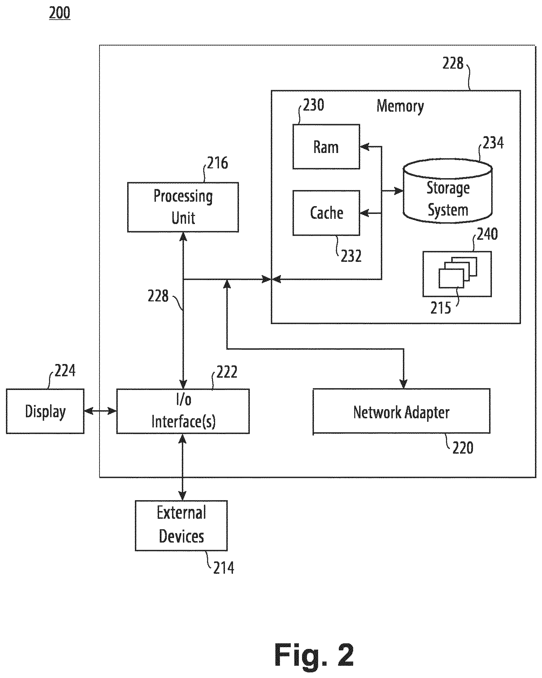

FIG. 2 is a schematic block diagram of an example network computing device 200 (e.g., computing monitoring device 103, BMS computer system 106, etc.) that may be used (or components thereof) with one or more embodiments described herein, e.g., as one of the nodes shown in the network 100. As explained above, in different embodiments these various devices are configured to communicate with each other in any suitable way, such as, for example, via communication network 100. It is to be appreciated and understood that in certain illustrated embodiments, the computer monitoring device 103 as described herein, may be a separate computer component/system (e.g., network 100 coupled), or may be integrated as unitary component/system with a BMS 106 computer system.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, including a BMS computer system 106, and a computer monitoring system 103 configured and operative to provide automated grouping of assets associated with a computer database of a BMS 106.

Computing device 200 is operational with numerous other special purpose computing system environments or configurations. Examples of well-known computing systems, environments, and/or configurations that may be suitable for use with computing device 200 include, but are not limited to, cloud computing systems (including, but not limited to: Infrastructure as a Service (IaaS); Software as a Service (SaaS); Platform as a Service (PaaS); and Private cloud), personal computer systems, server computer systems, thin clients, thick clients, hand-held or laptop devices, multiprocessor systems, microprocessor-based systems, programmable consumer electronics, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices. In accordance with the illustrated embodiments, computing device 200 (e.g., computer monitoring system 103) is configured and operative, based upon analysis of data captured from an AIC system (e.g., BMS 106), to provide automated grouping of assets in the BMS 106, such as " points" (as defined below) and equipment (preferably defined by one or more points, and as defined further below), based upon certain commonality of electronic information contained in a database associated with an AIC, such as a BMS/SCADA system 106, via one or more AI algorithmic techniques.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random-access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules that are configured to carry out the functions of embodiments of illustrated embodiments.

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein, including, but not limited to, providing automated grouping of assets in an AIC system, such as "points" (as defined below) and equipment (preferably defined by one or more points), based upon certain commonality of electronic attribute information contained in a database associated with an AIC system, via one or more AI algorithmic techniques.

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: big data technologies encompassing large and diverse datasets that are significant in volume, which are commonly used in machine learning, predictive modeling, and other advanced analytics to solve business problems and make informed decisions; non-relational databases (NoSQLs); Blob storage; relational databases (SQL); as well as microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

It is to be understood the embodiments described herein are preferably provided with Artificial Intelligence (AI) techniques to provide automated grouping of assets in an AIC system, such as "points" (as defined below) and equipment (preferably defined by one or more points), based upon certain commonality of data points (and equipment), using one or more artificial intelligence techniques, for categorizing such commonly tagged points and/or equipment in a computer database associated with an AIC system, via one or more algorithmic techniques, as described herein. Thus, preferably integrated into a computer monitoring system (e.g., 103) coupled to a plurality of external databases / data sources (preferably via an API) is an AI system that implements machine learning and artificial intelligence algorithms to conduct one or more of the above-mentioned tasks for grouping of assets in an AIC system (e.g., BMS 106) based upon certain commonality of electronic information contained in a database associated with an AIC, via one or more AI algorithmic techniques. For instance, the AI system may include two subsystems: a first sub-system that learns from historical data; and a second subsystem to identify and recommend one or more parameters or approaches based on the learning. It should be appreciated that although the AI system may be described as two distinct subsystems, the AI system can also be implemented as a single system incorporating the functions and features described with respect to both subsystems.

Also, in accordance with the illustrated embodiments, an artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value. The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function. The purpose of the learning of the artificial neural network may be to determine the model parameters that minimize a loss function. The loss function may be used as an index to determine optimal model parameters in the learning process of the artificial neural network. Machine learning may be classified into supervised learning, unsupervised learning, and reinforcement learning according to a learning method. The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

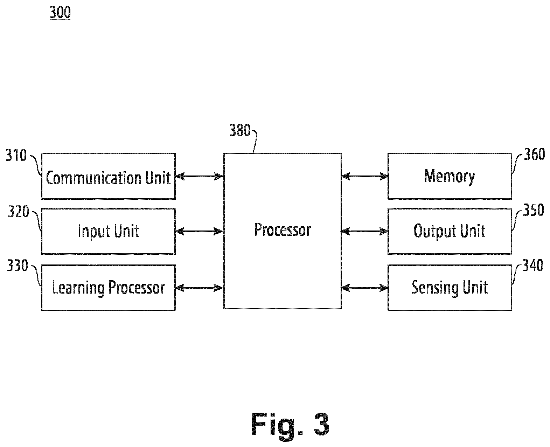

Machine learning, which is implemented as a deep neural network (DNN) including a plurality of hidden layers among artificial neural networks, is also referred to as deep learning, and the deep learning is part of machine learning. FIG. 3 illustrates an AI device 300 according to an illustrated embodiment. In accordance with the illustrated embodiments, the AI device 300 is preferably integrated into in verification computer system 103.

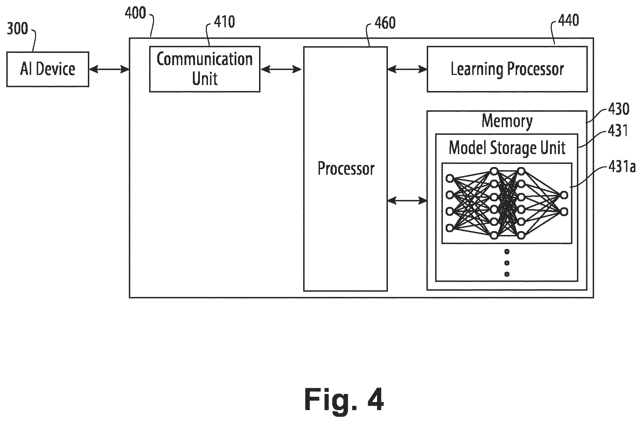

Referring now FIG. 3, in conjunction with FIGS. 1 and 2, the AI device 300 is operatively coupled to, or integrated with computing device 200, in accordance with the illustrated embodiments described herein. AI device 300 preferably includes a communication unit 310, an input unit 320, a learning processor 330, a sensing unit 340, an output unit 350, a memory 370, and a processor 380. The communication unit 310 may transmit and receive data to and from external devices such as other AI devices 300a to 300e and an AI server 400 (FIG. 4) by using wire/wireless communication technology. For example, the communication unit 310 may transmit and receive sensor information, a user input, a learning model, and a control signal to and from external devices.

The communication technology used by the communication unit 310 preferably includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 320 may acquire various kinds of input data received from an AIC system, to be used when an output is acquired by using learning model. The input unit 320 may acquire raw input data. In this case, the processor 380 or the learning processor 330 may extract an input feature by preprocessing the input data. The learning processor 330 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 330 may perform AI processing together with the learning processor 330 of the AI server 400, and the learning processor 330 may include a memory integrated or implemented in the AI device 300. Alternatively, the learning processor 330 may be implemented by using the memory 370, an external memory directly connected to the AI device 300, or a memory held in an external device. The sensing unit 340 may acquire at least one of internal information about the AI device 300, ambient environment information about the AI device 300, and user information by using various sensors.

The output unit 350 preferably includes a display unit for outputting/displaying relevant information to a user in accordance with the illustrated embodiments described herein. The memory 370 preferably stores data that supports various functions of the AI device 300. For example, the memory 370 may store input data acquired by the input unit 320, learning data, a learning model, a learning history, and the like.

The processor 380 preferably determines at least one executable operation of the AI device 300 based on information determined or generated by using a data analysis algorithm or a machine learning algorithm. The processor 380 may control the components of the AI device 300 to execute the determined operation. To this end, the processor 380 may request, search, receive, or utilize data of the learning processor 330 or the memory 370. The processor 380 may control the components of the AI device 300 to execute the predicted operation or the operation determined to be desirable among the at least one executable operation. When the connection of an external device is required to perform a determined operation, the processor 380 may generate a control signal for controlling the external device and may transmit the generated control signal to the external device. The processor 380 may acquire intention information for the user input and may determine the user's requirements based on the acquired intention information. The processor 380 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 330, may be learned by the learning processor 340 of the AI server 400, or may be learned by their distributed processing. The processor 380 may collect history information including the operation contents of the AI device 300 or the user's feedback on the operation and may store the collected history information in the memory 370 or the learning processor 330 or transmit the collected history information to the external device such as the AI server 400. The collected history information may be used to update the learning model.

The processor 380 may control at least part of the components of AI device 300 so as to drive an application program stored in memory 370. Furthermore, the processor 380 may operate two or more of the components included in the AI device 300 in combination so as to drive the application program.

FIG. 4 illustrates an AI server 400 according to the illustrated embodiments. It is to be appreciated that the AI server 400 may refer to a device that learns an artificial neural network by using a machine learning algorithm or uses a learned artificial neural network. The AI server 400 may include a plurality of servers to perform distributed processing or may be defined as a 5G network. At this time, the AI server 400 may be included as a partial configuration of the AI device 300 and may perform at least part of the AI processing together. The AI server 400 may include a communication unit 410, a memory 430, a learning processor 440, a processor 460, and the like. The communication unit 410 can transmit and receive data to and from an external device such as the AI device 300. The memory 430 may include a model storage unit 431. The model storage unit 431 may store a learning or learned model (or an artificial neural network 431a) through the learning processor 440.

The learning processor 440 may learn the artificial neural network 431a by using the learning data. The learning model may be used in a state of being mounted on the AI server 400 of the artificial neural network or may be used in a state of being mounted on an external device such as the AI device 300. The learning model may be implemented in hardware, software, or a combination of hardware and software. If all or part of the learning models are implemented in software, one or more instructions that constitute the learning model may be stored in memory 430. The processor 460 may infer the result value for new input data by using the learning model and may generate a response or a control command based on the inferred result value.

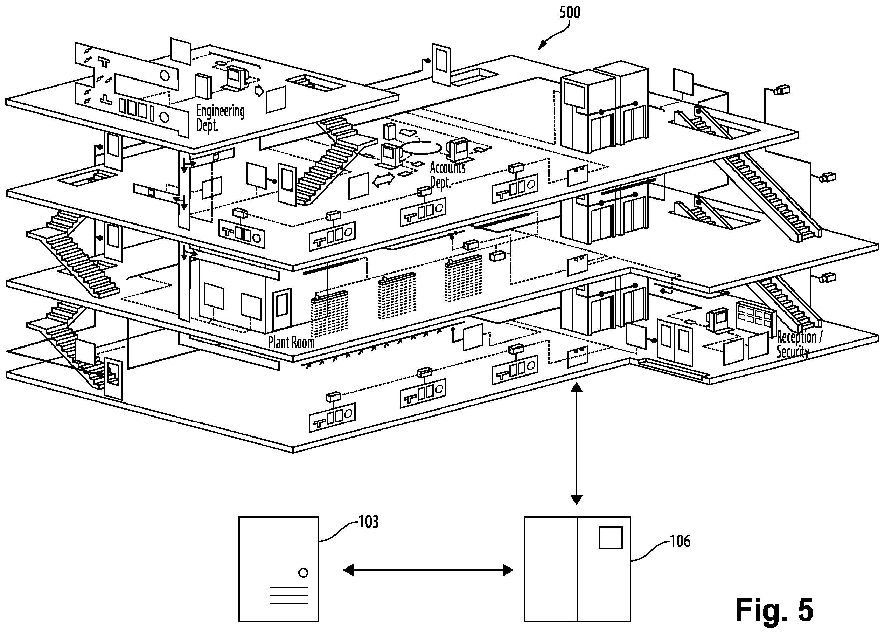

With the exemplary communication network 100 (FIG. 1), computing device 200 (FIG. 2), AI device 300 (FIG. 3) and AI server 400 (FIG. 4) being generally shown and discussed above, description of certain illustrated embodiments will now be provided with below reference to FIGS. 5-8 (and with continuing reference to FIGS 1-4). It is to be understood and appreciated that FIGS. 1-4 are intended to provide a brief, general description of an illustrative and/or suitable exemplary environment in which the below described illustrated embodiments may be implemented. FIGS. 1-4 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

In accordance with the illustrated embodiments, and with reference to FIG. 5, it is to be understood and appreciated an AIC system, such as a building management system (BMS) is a computer-based system 106 that monitors and controls a building's 500 mechanical and electrical equipment including (including, but not limited to; HVAC (heating, ventilation, air conditioning), lighting, power systems, fire systems, and security systems). It is to be appreciated a BMS 106 provides building automation, which is computer-based control system which reduces the workforce, automate the system, and saving energy consumption in buildings by monitoring and controlling the mechanical and electrical equipment in modern-day buildings or industrial plants.

It is to be further understood and appreciated that while the illustrated embodiments are described relative for use with a BMS 106, it is not to be understood to be limited thereto as the computer monitoring system 103 in accordance with the illustrated embodiments may have application to other automated and industrial control system (AIC) systems, such as Supervisory Control and Data Acquisition (SCADA) systems. Thus, in this instance, the system 106 is a SCADA system whereupon the computer monitoring system 103 is operatively coupled to the SCADA system 106 for providing automated grouping of assets in the SCADA system 106, such as "points" (as defined below) and equipment (preferably defined by one or more points, and as defined further below), based upon certain commonality of electronic information contained in a database associated with a SCADA system 106, via one or more AI algorithmic techniques. A SCADA system is computer-based system utilizing software and hardware to monitor, control, and analyze industrial processes and devices. SCADA systems can be used remotely or on-site to collect data from industrial equipment, which supervisors can then use to optimize and control operations. SCADA systems are often referred to as automation technology and are used in many industries, including: Energy and power, Data centers, Energy grids, Power systems, Manufacturing, Food and beverages, Oil and gas, Water and wastewater, and Transportation.

For ease of description purposes, the computer monitoring system 103 in accordance with the illustrated embodiments is described for use with a BMS 106, but as mentioned above, it has application with other AIC systems, such as a SCADA system, and thus is not to be understood to be limited to application with a BMS 106.

The BMS 106 may be configured to collect data samples from building equipment (e.g., sensors, controllable devices, building subsystems, etc.) and generate raw timeseries data from the data samples. The BMS 106 processes the raw timeseries data using a variety of data platform services to generate optimized timeseries data (e.g., data rollup timeseries, virtual point timeseries, fault detection timeseries, etc.). The optimized timeseries data can be provided to various applications and/or stored in local or hosted storage. In some embodiments, the BMS 106 includes three different layers that separate (1) data collection, (2) data storage, retrieval, and analysis, and (3) data visualization. This allows the BMS 106 to support a variety of applications that use the optimized timeseries data and allows new applications to reuse the infrastructure provided by the data platform services. Typical primary components of a BMS system 106 include: 1) Hardware (e.g., DDC-Direct digital controllers, sensors, and actuators); 2) Software (e.g., programming and/or configuration tools, and graphical user interfaces); and 3) Networking protocols (e.g., TCP/IP- Transfer control protocols/Internet Protocol, BACnet- Building automation controller network, LonWorks, and Modbus).

An important aspect regarding certain functionality provided by an AIC system, such as a BMS 106, is inventorying and managing assets associated with a building 500 (FIG. 5) managed by the BMS 106. For purposes of the illustrated embodiments, such assets are to consist of "points" and "equipment". A "point" is to be understood to include (but not to be limited to): a specific data input or output that the BMS system 106 monitors or controls. Points can be either physical or virtual and are typically used to represent various parameters within the building's systems 500. They can include: 1) Sensor Points - inputs from sensors measuring variables such as temperature, humidity, occupancy, light levels, etc.; 2) Control Points - outputs to control devices such as actuators, valves, dampers, and relays; 3) Setpoints - desired values for controlled variables, like the temperature setpoint for a thermostat; 4) Status Points - indicate the current state of equipment, such as whether a fan or pump is on or off; and 5) Alarm Points - trigger alerts when monitored parameters exceed predefined thresholds. It is to be appreciated that each point typically provides critical information that helps the BMS 106 manage the building's environment and operations efficiently. And with regard to an "equipment" managed by the BMS 106, for the purposes of the illustrated embodiments, it is to be understood to consist of being defined by a plurality of points relating to devices and systems used in a BMS 106. Examples of such equipment include (but not to be limited to): 1) Sensors (e.g., for temperature, humidity, occupancy, etc.); 2) Controllers (e.g., to manage HVAC, lighting, and other systems); 3) Actuators (e.g., to operate dampers, valves, and other devices); 4) Software interfaces (e.g., for monitoring and controlling the system); 5) Communication devices (e.g., to link different components of the system); and 6) HVAC devices (e.g. , Air Handling Units, Fan Coil Units, Pumps, Boilers, etc (e.g., https://ontology.brickschema.org/brick/Equipment.html).

It is to be understood and appreciated that "equipment" in a BMS is typically defined using a combination of hardware and software components. In a BMS, equipment is typically defined by a container, which involves logical grouping and encapsulation of related devices and systems. This approach simplifies management, enhances scalability, and provides efficient control and monitoring. Containers are preferably implemented through BMS software, utilizing configuration tools, databases, and graphical user interfaces to represent and manage grouped equipment effectively.

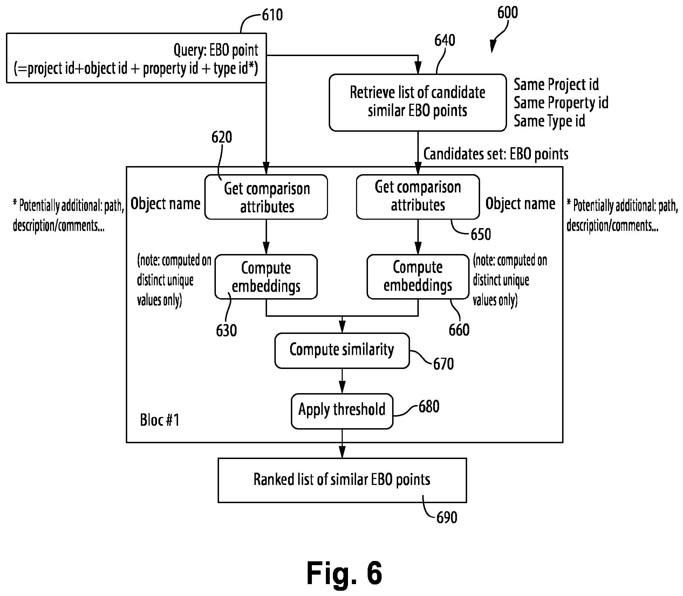

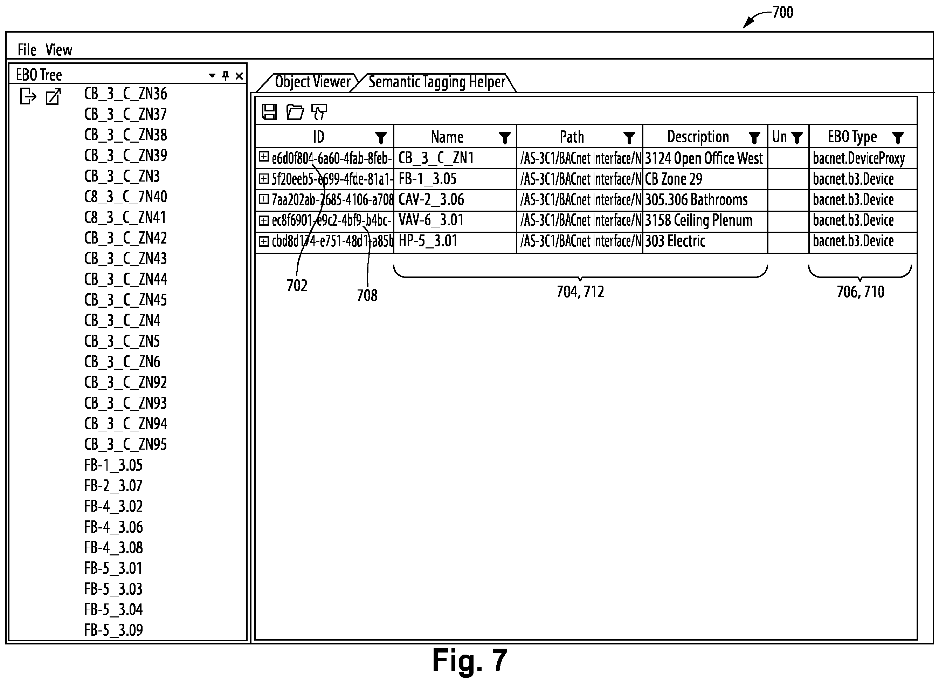

In accordance with the illustrated embodiments, and with reference to FIGS. 5-8 (with continuing reference to FIGS 1-4), the computer monitoring system 103, interacts with the BMS 106, preferably via an API and communications network 100, to retrieve certain data from the BMS 106, and is operative and configured to provide automated grouping of a point(s) and/or equipment managed by a BMS 106 as described herein below. With specific reference now to FIG. 6, illustrated and described is a process 600, performed by the computer monitoring device 103 for grouping like points in a computer database 700 (FIG. 7) managed by a building management system (BMS) 106. It is to be appreciated and understood the illustrated embodiments described herein for logically grouping assets in a computer database in an automated and industrial control system (AIC) provides a technical improvement to a computer database of assets managed by AIC by automating the process for logically grouping assets in a computer database in a AIC managed computer database.

Starting at step 610, a point 702 is identified, preferably by a user via an interactive GUI, as a reference point for grouping one or more points, that are similar to the identified/reference point, from a plurality of other points managed by the BMS 106 as entered/contained in a computer database 700 (FIG. 7) associated with BMS 106. It is to be appreciated, each point in the BMS computer database 700 is preferably contained in a virtual directory/container path having a plurality of textual attributes 704, which may include: a name, type, unit, descriptive notes, etc., associated with the point. Additional attribute information 706 may also include: a project id, object id, property id and/or type id associated with each point. The point 702 may be identified by a user of the BMS 106, preferably via an interactive GUI 700 generated on a display component (e.g., 224) associated with the BMS 106. It is noted a user's selection of the reference point may be dependent upon certain attribute information associated with the point contained in the BMS database 700 (such as: a project id, property id, or type id) and as displayed in the interactive GUI 700. Once the reference point 702 is identified (step 610), next at step 620, the computer monitoring system 103 captures from the BMS computer database, one or more textual attributes 704 associated with the identified point (e.g., a textual attribute contained in a virtual directory/container path of the BMS database 700 for the reference point, such as: a name, type, unit, descriptive notes, etc.). At step 630, the captured textual attributes 704 (step 620) are then embedded into at least one numeral value (the reference "numerical value") using an algorithmic technique, preferably an AI technique such as via a large language model (LLM). In accordance with the illustrated embodiments, the LLM may consist of a sentence transformer, which is a model that maps a variable-length text to a fixed-size embedding representing that input's meaning. A sentence transformer is an AI model (e.g., a deep neural network model) that provides logical methods to compute embeddings (dense vector representations) for words, such as the aforesaid captured textual attributes associated with the reference point 702. Texts are embedded in a vector space such that similar text is close, which enables applications such as semantic search, clustering, and retrieval, in accordance with the illustrated embodiments.

Next, at step 640, the computer monitoring system 103 captures, from the BMS computer database 700, point candidates (e.g., 708) from the other points listed in the BMS computer database 700. These points candidates 708, which may be subset of other points managed by the BMS 106, is preferably automatically identified by the computer monitoring system 103 according to certain criteria numerical and/or textual attributes contained in the BMS database 700 (such as: a project id, property id, or same type id.) associated with each of the plurality of other points relative to comparison with certain criteria numerical and/or textual attributes contained in the BMS database 700 (such as: a project id, property id, or same type id) associated with the user identified point 702 (step 610).

Once the candidate points (e.g., 708) are identified (step 640), next at step 650, the computer monitoring system 103 captures from the BMS computer database 700, one or more textual attributes (e.g., 712) associated with each candidate point (708) (e.g., a textual attribute contained in a virtual directory path for the reference point, such as: a name, type, unit, descriptive notes, etc.). The captured textual attributes (712) (step 650) for each candidate point (708) are then embedded into a respective at least one numeral value using the aforementioned algorithmic technique (e.g., the aforementioned sentence transformer LLM), step 660.

Once the embeddings for the reference point (702) (step 630) and each candidate point (708)(step 660) are computed/calculated, the computer monitoring system 103 then preferably computes the similarity of the embedded at least one numerical value of the reference point (702) with the embedded at least one numerical value for each candidate point (708), via a mathematical comparison technique, step 670. In accordance with the illustrated embodiments, the mathematical comparison technique consists of applying a cosine similarity algorithm to the aforesaid embedded numerical values. The cosine similarity, in accordance with the illustrated embodiments, is utilized to measure the similarity between two vectors of the embedded numerical value for the reference point (702) with the embedded numerical value for each of the candidate points (708). It is preferably measured by the cosine of the angle between two vectors and determines whether two vectors are pointing in approximately the same direction. Based upon this computed similarity (step 670), the numerical value(s) of the reference point (702) is then compared with each numerical value(s) for each of the candidate points (708) using applied similarity threshold values, step 680.

At step 690, based upon each aforesaid comparison (step 680), the reference point (702) is grouped with the candidate points (708) determined to have a similar embedded at least one numerical value, preferably based on the similarity threshold, to that of the identified point. Additionally, preferably based upon a labelling technique, a semantic tag 802 is applied to each of the grouped points. It is to be appreciated and understood the semantic tags applied to the grouped points may be derived from known descriptive metadata models, wherein at least some of these data models are semantic. For instance, the tags are preferably drawn from a known publicly available data model, in order to benefit from interoperability. Examples include (but are not limited to): Haystack, SSN/SOSA, SAREF, BRICK, REC, and the IEC61850 data model.

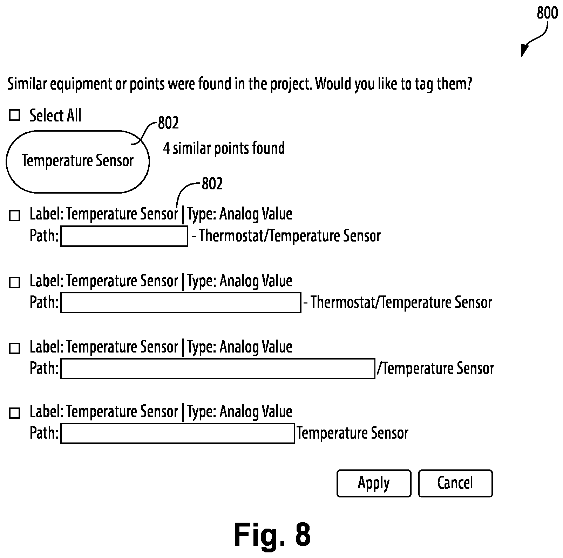

It is to be further understood and appreciated the labelling technique may be based on at least one point in the group. This grouping/tagging/labelling of like points may preferably be displayed on a user interactive GUI 800 of a display associated with the BMS 106 and/or computer monitoring system 103 (as shown in FIG. 8). Thus, certain advantages of the illustrated embodiments include: 1) automatic grouping of similar user-defined and BMS system objects within a BMS by AI; and 2) providing an interactive display of object groupings in which a user may select/deselect items from the group and subsequently apply a tag/label 802 to many objects in one workflow.

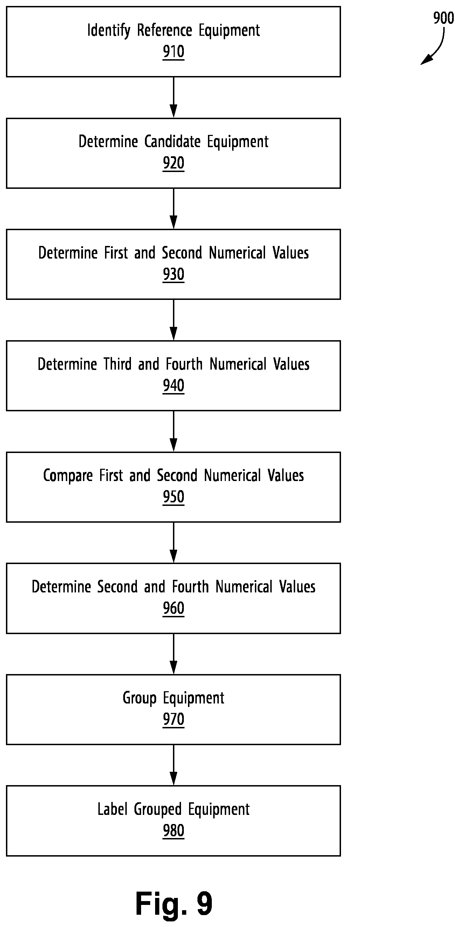

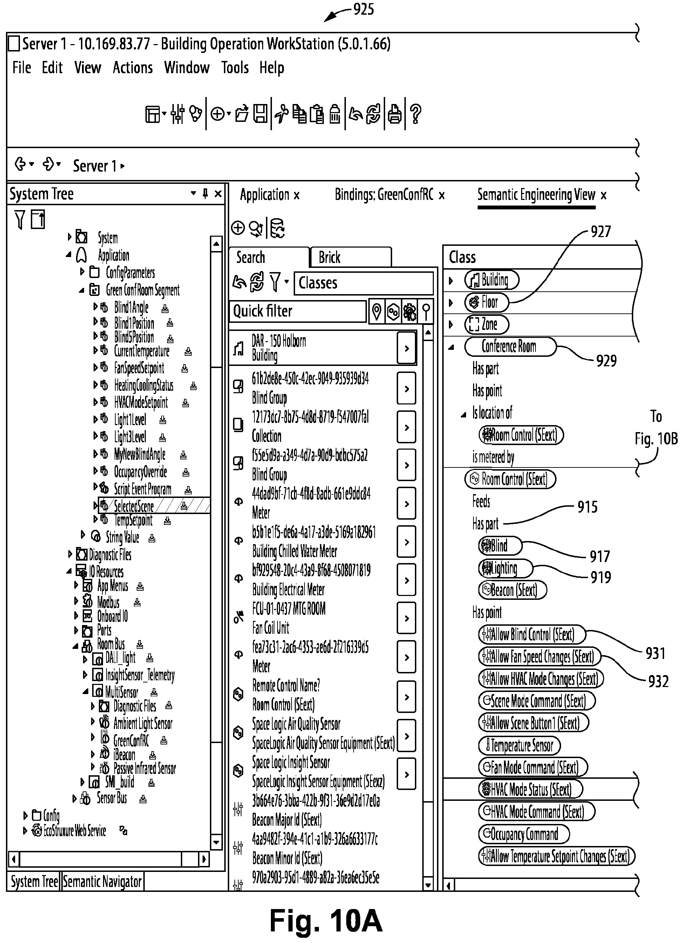

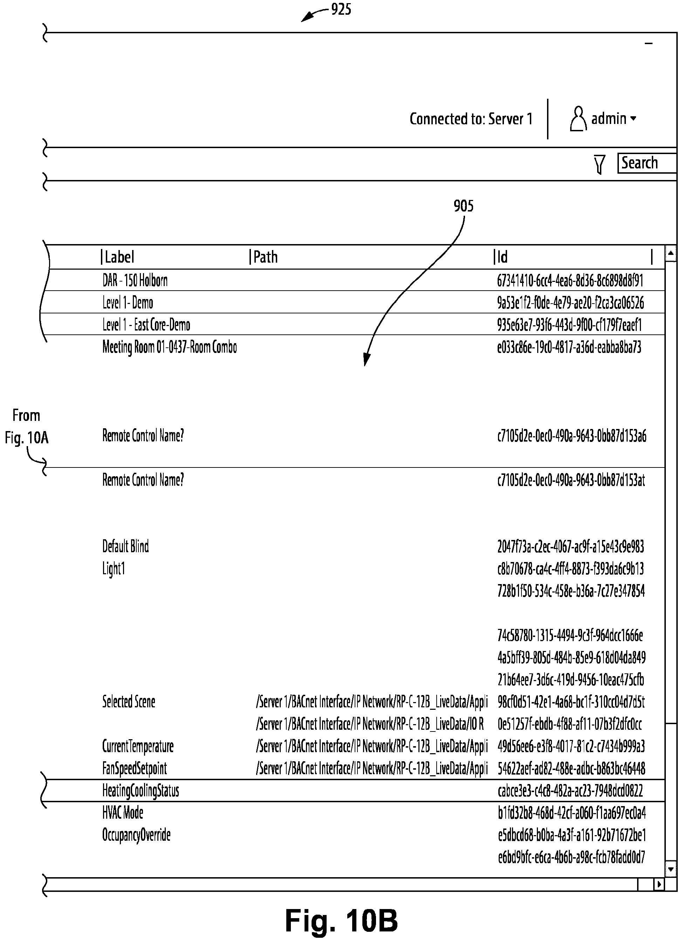

With the grouping of like points being described above relative to FIGS. 7 and 8, and with specific reference now to FIGS. 9 and 10, illustrated and described is a process 900, performed by the computer monitoring device 103 for grouping like equipment in a computer database 905 (FIG. 10) managed by a building management system (BMS) 106. As mentioned above, an equipment it is to be understood to consist of being defined by a plurality of points relating to devices and systems used in a BMS 106. For instance, in a BMS 106, equipment is typically defined in virtual container path of a computer database managed by the BMS 106, which involves logical grouping and encapsulation of related devices and systems. This approach simplifies management, enhances scalability, and provides efficient control and monitoring. Containers are preferably implemented through BMS software, utilizing configuration tools, databases, and graphical user interfaces to represent and manage grouped equipment effectively.

Starting at step 910, an equipment 915 and it's associated container points are identified, preferably by a user via an interactive GUI 925, as a reference equipment, for grouping one or more other candidate equipment(s), that are similar to the identified/reference equipment 915, from a plurality of other candidate equipment managed by the BMS 106, as preferably defined in a container path of the database 905 associated with BMS 106 (FIG. 10). For instance, the reference equipment 915 (e.g., HVAC) is preferably user defined in the database 905 by one or more points (e.g., 917 (e.g., a temperature sensor), and 919 (e.g., a humidity sensor)) associated with the reference equipment 915. It is noted a user's selection of the reference equipment 915, and points 917, 919 may be dependent upon certain attribute information associated with the reference equipment and points contained in the BMS database 905 (such as: a project id, property id, or type id) and as displayed in the interactive GUI 925. It is to be understood and appreciated each equipment listed in the database 905 has an associated textual label preferably descriptive of the equipment (e.g., HVAC - Floor 1). It is to be further appreciated, each equipment defined in the BMS computer database 905 is preferably contained in a virtual directory/container path having a plurality of textual attributes which may include: a name, type, unit, descriptive notes, etc., associated with the equipment (and as similar to a point, as mentioned above).

Next, at step 920, the computer monitoring system 103 captures, from the BMS computer database 905, one or more equipment candidates (e.g., 927, 929) from the other equipment contained in the BMS computer database 905. These equipment candidates (927, 929) are preferably automatically identified by the computer monitoring system 103 according to certain criteria numerical and/or textual attributes/labels contained in the BMS database 905 associated with each of the plurality of other equipment(s) relative to comparison with certain criteria numerical and/or textual attributes/labels contained in the BMS database 905 (such as: a project id, property id, or same type id) associated with the reference equipment 915 (step 910).

After the reference equipment 915, and points 917, 919 are identified (step 910), at step 930, the computer monitoring system 103 captures from the BMS computer database 905, one or more textual attributes/labels associated with the identified reference equipment 915, and one or more textual attributes associated with each point (e.g., 917, 919) associated with the reference equipment 915 (e.g., a textual attribute contained in a virtual directory/container path of the BMS database 905 for each said point (e.g., 917, 919), such as: a name, type, unit, descriptive notes, etc.). The captured textual attributes/labels associated with the reference equipment 915 are then embedded into one or more first numeral values (the "first numerical value"), and the captured textual attributes associated with each point (e.g., 917, 919) associated with the reference equipment 915 are then embedded into one or more second numeral values (the "second numerical value") using an algorithmic technique, preferably an AI technique such as via a large language model (LLM). In accordance with the illustrated embodiments, the LLM may consist of a sentence transformer, which is a model that maps a variable-length text to a fixed-size embedding representing that input's meaning. A sentence transformer is an AI model (e.g., a deep neural network model) that provides logical methods to compute embeddings (dense vector representations) for words, such as the aforesaid captured textual attributes associated with the reference equipment 915. For instance, texts are embedded in a vector space such that similar text is close, which enables applications such as semantic search, clustering, and retrieval, in accordance with the illustrated embodiments.

Next, at step 940, the computer monitoring system 103 captures from the BMS computer database 905, one or more textual attributes/labels associated with a candidate equipment 927, and one or more textual attributes associated with each point (e.g., 931, 932) associated with the candidate equipment 927 (e.g., a textual attribute contained in a virtual directory/container path of the BMS database 905 for each point (e.g., 931, 932), such as: a name, type, unit, descriptive notes, etc.). The captured textual attributes/labels associated with the candidate equipment 927 are then embedded into one or more third numeral values (the "third numerical value"), and the captured textual attributes associated with each point (e.g., 931, 932) associated with the candidate equipment 927 are then embedded into one or more fourth numeral values (the "fourth numerical value"), preferably using the aforementioned algorithmic AI technique (e.g., a sentence transformer LLM).

Once the embeddings for the reference equipment (915) (step 930) and each candidate equipment (e.g., 927) (step 950) are computed/calculated, at step 950, the computer monitoring system 103 then preferably computes the similarity of the embedded first numerical value of the reference equipment (917) with the embedded third numerical value for each candidate equipment (e.g., 927), via a mathematical comparison technique. In accordance with the illustrated embodiments, the mathematical comparison technique consists of applying a cosine similarity algorithm to the aforesaid embedded numerical values. The cosine similarity, in accordance with the illustrated embodiments, is utilized to measure the similarity between two vectors of the embedded first numerical value for the reference equipment (917) with the embedded third numerical value for each of the candidate equipment (e.g., 927, 929). It is preferably measured by the cosine of the angle between two vectors and determines whether two vectors are pointing in approximately the same direction. Based upon this computed similarity, the first numerical value(s) of the reference equipment (915) is then compared with each third numerical value(s) for each of the candidate equipment (927, 929) using applied similarity threshold values, step 950.

Next, at step 960, responsive to determining there is a sufficient level of similarity between the first numerical value of the reference equipment 915 with the third numerical value for a candidate equipment (e.g., 927), then for each candidate equipment (e.g., 927) determined to have said sufficient level of similarity (step 950), then computer monitoring system 103 computes the similarity of the embedded fourth numerical value for each said candidate equipment (e.g., 927) with the embedded second numerical value for the reference equipment (917), preferably via the mathematical comparison technique as mentioned above with regard to step 950. And based upon this computed similarity, the second numerical value(s) of the reference equipment (915) is then compared with each fourth numerical value(s) for each of the candidate equipment (927, 929) using applied similarity threshold values.

At step 970, based upon the aforesaid comparison (step 960) of the embedded second numerical value of the reference equipment (915) with each embedded fourth numerical value of the candidate equipment (e.g., 927, 929), the reference equipment (915) is grouped with the candidate equipment (e.g., 927) determined to have similar embedded numerical values, preferably based on the similarity threshold. Additionally, at step 980, and preferably based upon a labelling technique, a semantic tag is applied to each of the grouped equipment, and a semantic tag may be applied to each of the points in the grouped equipment. It is to be appreciated and understood the semantic tags applied to the grouped equipment and points may be derived from known descriptive metadata models, wherein at least some of these data models are semantic. For instance, the tags are preferably drawn from a known publicly available data model, in order to benefit from interoperability. Examples include (but are not limited to): Haystack, SSN/SOSA, SAREF, BRICK, REC, and the IEC61850 data model.

With certain illustrated embodiments described above, it is to be appreciated that various non-limiting embodiments described herein may be used separately, combined, or selectively combined for specific applications. Further, some of the various features of the above non-limiting embodiments may be used without the corresponding use of other described features. The foregoing description should therefore be considered as merely illustrative of the principles, teachings, and exemplary embodiments of the illustrated embodiments, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer monitoring device for grouping like equipment in a computer database managed by an automated and industrial control system (AIC), wherein each equipment is defined by a plurality of points, and has a textual label, in the computer database, comprising:
one or more memory devices configured to store instructions thereon that, when executed by one or more processors, cause the one or more processors to:
identify a container in the database as a reference equipment, for grouping similar equipment in the computer database;
identify at least one reference point associated with the reference equipment in the computer database;
embed, using an algorithmic technique, a textual label of the reference equipment in a first numeral value, and embed in at least one second numerical value textual attributes associated with the at least one reference point in the database associated with the reference equipment;
embed, using an algorithmic technique, a textual label of at least one candidate equipment container (candidate equipment) in a third numeral value, and embed in at least one fourth numerical value textual attributes associated with each designated point in the database associated with the at least one candidate equipment;
compare the first and third numerical values to one another to determine if there is a sufficient level of similarity;
compare, responsive to determining there is a sufficient level of similarity between the first and third numerical values, the second and fourth numerical values to one another to determine if there is a sufficient level of similarity;
group, in the computer database, the reference equipment with the at least one candidate equipment, responsive to determining a sufficient level of similarity between the third and fourth numerical values; and
assign, based upon a labelling technique, a semantic tag to each of the equipment grouping.

2. The computer monitoring device as recited in claim 1, wherein a point is a software identifier that the AIC uses to read and write data to a building controlled and/or monitored by the AIC.

3. The computer monitoring device as recited in claim 1, wherein each equipment is defined in the computer database by a container providing a grouping of points logical related to the equipment.

4. The computer monitoring device as recited in claim 1, wherein the AIC is one of either a building management system (BMS) or a supervisory control and data acquisition (SCADA) system,
wherein a textual attribute in particular further consists of at least a portion of a container path of an AIC system tree location associated with a point.

5. The computer monitoring device as recited in claim 1, wherein each textual label consists of a variable name,
wherein a textual attribute in particular consists of a variable name for a point.

6. The computer monitoring device as recited in claim 1, wherein each textual label and textual attribute are embedded into a numerical value using one or more artificial intelligence (AI) techniques,
wherein the one or more AI techniques in particular includes a large language model (LLM).

7. The computer monitoring device as recited in claim 1, wherein the one or more processors utilize a cosine similarity algorithm to compare the first numerical value to each third numerical value.

8. The computer monitoring device as recited in claim 1, wherein the one or more processors utilize a cosine similarity algorithm to compare the second numerical value of each point associated with the reference equipment to each fourth numerical value of the other points associated with each at least another equipment.

9. The computer monitoring device as recited in claim 1, wherein the one or more processors use an application programming interface (API) for capturing data associated with each point from the AIC computer database.

10. The computer monitoring device as recited in claim 1, wherein the points in the database that define an equipment are user designated.

11. The computer monitoring device as recited in claim 1, wherein a designated point in the database is a descendent point in a system tree of the database of a container associated with a candidate equipment.

12. The computer monitoring device as recited in claim 1, wherein a textual attribute further consists of descriptive text in the database associated with a point.

13. A computer-implemented method for grouping like equipment in a computer database managed by an automated and industrial control system (AIC), wherein each equipment is defined by a plurality of points, and has a textual label, in the computer database, comprising:
identifying, by a computer processor from the computer database, a container in the database as a reference equipment, for grouping similar equipment in the computer database;
identifying, by the computer processor, at least one reference point associated with the reference equipment in the computer database;
embedding, by the computer processor using an algorithmic technique, a textual label of the reference equipment in a first numeral value, and embed in at least one second numerical value textual attributes associated with the at least one reference point in the database associated with the reference equipment;
embedding, by the computer processor using an algorithmic technique, a textual label of at least one candidate equipment container (candidate equipment) in a third numeral value, and embed in at least one fourth numerical value textual attributes associated with each designated point in the database associated with the at least one candidate equipment;
comparing, by the computer processor, the first and third numerical values to one another to determine if there is a sufficient level of similarity;
comparing, by the computer processor, responsive to determining there is a sufficient level of similarity between the first and third numerical values, the second and fourth numerical values to one another to determine if there is a sufficient level of similarity; and
grouping, by the computer processor, in the computer database, the reference equipment with the at least one candidate equipment, responsive to determining a sufficient level of similarity between the third and fourth numerical values.

14. The computer-implemented method as recited in claim 13, wherein a textual attribute consists of at least a portion of a virtual computer directory path of an AIC system tree location associated with a point.

15. A computer monitoring device for grouping like equipment in a computer database managed by a building management system (BMS), wherein each equipment is defined by a plurality of points, and has a textual label, in the computer database, comprising:
one or more memory devices configured to store instructions thereon that, when executed by one or more processors, cause the one or more processors to:
identify a container in the database as a reference equipment, for grouping similar equipment in the computer database;
identify at least one reference point associated with the reference equipment in the computer database;
embed, using a large language model (LLM), a textual label of the reference equipment in a first numeral value, and embed in at least one second numerical value textual attributes associated with the at least one reference point in the database associated with the reference equipment;
embed, using the LLM, a textual label of at least one candidate equipment container (candidate equipment) in a third numeral value, and embed in at least one fourth numerical value textual attributes associated with each designated point in the database associated with the at least one candidate equipment;
compare, using a cosine similarity algorithm, the first and third numerical values to one another to determine if there is a sufficient level of similarity;
compare, using the cosine similarity algorithm, and responsive to determining there is a sufficient level of similarity between the first and third numerical values, the second and fourth numerical values to one another to determine if there is a sufficient level of similarity;
group, in the computer directory, the reference equipment with the at least one candidate equipment, responsive to determining a sufficient level of similarity between the third and fourth numerical values; and
assign, based upon a labelling technique, a semantic tag to each of the equipment grouping.
